# EUROPEAN PATENT APPLICATION

(11) **EP 2 543 422 A1**
(43) Date of publication of application: **09.01.2013**
(21) Application number: 11750529.7
(22) Date of filing: 23.02.2011
(51) Int. Cl.: B01D 37/04, B24B 57/02

(54) **LIQUID FILTRATION METHOD**

(30) Priority: 01.03.2010 JP 2010044344
(71) Applicant: Fujimi Incorporated, Kiyosu-shi, Aichi 452-8502 (JP)
(72) Inventor: IWASA, Shoji, Kiyosu-shi Aichi 452-8502 (JP); SUGIYAMA, Hiroyasu, Kiyosu-shi Aichi 452-8502 (JP); MIWA, Naoya, Kiyosu-shi Aichi 452-8502 (JP); SAKAI, Tomoyuki, Kiyosu-shi Aichi 452-8502 (JP)
(74) Representative: Browne, Robin Forsythe
(86) International application number: PCT/JP2011/053993
(87) International publication number: WO 2011/108419

(57) **Abstract**

Disclosed is a filtration method that extends filter life and achieves high filtration efficiency, and also abrasive slurry produced by the method. In this filtration method, a filter is decompression-treated in a solvent-filled sealed container before liquid is filtered by the filter, after which the filter is used for filtering.

## Description

### TECHNICAL FIELD

The present invention relates to a filtration method for various liquids, particularly abrasive slurry containing fine particles such as abrasives as dispersoid.

### BACKGROUND ART

In a polishing process using abrasive slurry and an abrasive pad, the standard demanded for the surface smoothness and lack of defects of a processed surface is increasing every year. As a result, fine particles such as abrasives contained in the abrasive slurry having a smaller particle size are increasingly selected. Even if abrasives with a small average particle size are selected, the particle size of fine particles such as abrasives generally has a distribution, and coarse particles having extremely large particle sizes relative to the intended particle size may be contained. In such a case, these coarse particles are preferably removed because they may cause surface defects such as scratches.

These coarse particles contained in the abrasive slurry in which fine particles are dispersed in a liquid medium are generally removed by a filter. Filters for industrial use generally include a filter formed by winding plastic fiber around a core and a filter made of a plastic membrane with micro pores formed therein. Both filters allow a liquid to pass through gaps formed between fibers or pores formed in a membrane to remove coarse particles and the like which cannot pass through the filters. However, when a liquid is actually intended to be filtered using a commercially available filter as it is, filtration efficiency is not high immediately after starting use of it. This is probably because since commercially available filters are generally dry, a liquid does not easily permeate the pores of the filters immediately after starting use and air easily remains in the pores.

In particular, with respect to a viscous liquid, the filtration efficiency immediately after starting filtration of the liquid tends to be very poor compared with a liquid that is not viscous. As a pretreatment for improving the filtration efficiency, water may be injected into a filter. Although filtration will become easy after the permeation of water through pores by such a method, high pressure may be required depending on the material and pore size of a filter, and the pressure being higher than the burst pressure of the filter in some cases. A powerful pump is also required in order to obtain such high pressure. Further, the pore size of a filter generally has a distribution, and very small pores are also present, but water still does not easily permeate such small pores even if pressure is applied. Thus, the filtration efficiency will be further reduced because a part that water has not permeated cannot contribute to filtration. Furthermore, when a part contributing to filtration decreases, clogging of a filter may take place early, which may cause a reduction in productivity. Such a phenomenon tends to be remarkable in a viscous liquid such as abrasive slurry. Consequently, when a liquid is filtered by a filter, it is preferred to uniformly wet the inner part of pores before using the filter to remove air in the filter as much as possible.

In this regard, various pretreatment methods before filtration have been studied. For example, there is known a method in which a filter is wetted with an organic solvent such as isopropyl alcohol (hereinafter may be referred to as IPA) having compatibility with both a filter and water before water is filtered. Further, there is disclosed a method for introducing under pressure aqueous surfactant solution or the like into a hydrophobic porous hollow fiber membrane (Patent Document 1). However, in these methods, since IPA and a surfactant remain in filter pores after the treatment, the filter must be sufficiently cleaned with a large amount of cleaning liquid such as water in order to remove them, which poses a problem of cost and efficiency. On the other hand, a method for immersing a hydrophobic porous membrane in deaired water (Patent Document 2) is disclosed, but according to the study by the present inventors, it was found out that a sufficient effect cannot be obtained by only immersing a filter in deaired water and there is room for improvement as a pretreatment.

### PRIOR ART DOCUMENTS

Patent Document 1: Japanese Laid-Open Patent Publication No. 1-119310
Patent Document 2: Japanese Laid-Open Patent Publication No. 5-208121

### SUMMARY OF THE INVENTION

### Problems that the Invention is to Solve

Thus, an objective of the present invention is to provide a filtration method for various dispersions that achieves improvement in filtration efficiency and extension of filter life.

### Means for Solving the Problems

According to the present invention, a method for filtering a liquid by a filter is provided. The method is characterized by subjecting the filter to decompression treatment in a solvent-filled sealed container before the liquid is filtered by the filter, the solvent being a main component of the liquid.

### Effects of the Invention

The present invention achieves the following: improvement in the filtration efficiency immediately after starting use of a filter or immediately after filter replacement; improvement in the long-term filtration efficiency by reducing a part that does not contribute to the filtration by a filter; and the extension of filter life, that is, a longer interval of filter replacement or the increase in the amount of liquid passed through a filter by preventing the clogging of the filter. As a result, the increase in the efficiency and cost reduction of the filtration process are also achieved. This allows, for example, abrasive slurry containing abrasive grains as dispersoid to be highly efficiently produced at a low cost.

### MODES FOR CARRYING OUT THE INVENTION

Hereinafter, one embodiment of the present invention will be described.

### Liquid to be filtered

In the filtration method according to the present invention, liquid to be filtered is not particularly limited. That is, the filtration method according to the present invention can be applied to any liquid by selecting a filter described below depending on a component contained in the liquid and a component that should be removed from the liquid. However, the filtration method according to the present invention is particularly effective in removing, from a dispersion or dispersion material in which an insoluble fine particle component is dispersed in a solvent, the fine particle component or a part thereof, particularly coarse particles. It is also effective in removing, from a solution in which an impurity is suspended as an insoluble component, the impurity component. That is, it is preferred to use the method of the present invention for the purpose of permeating a solvent or a dispersion medium and particles having a desirable particle size among the particles dispersed in a liquid, and on the other hand, removing particles larger than the particles in the desirable range and other relatively large impurity components.

One of the specific examples of the liquid that can be filtered using the filtration method according to the present invention is abrasive slurry. The abrasive slurry is for polishing, for example, a silicon substrate, a silicon carbide substrate, a metal oxide, a semiconductor device substrate, a substrate for hard disks, glass, or a plastic. The abrasive slurry contains abrasive particles such as an oxide, a nitride, and a carbide, more specifically, such as alumina, silica, ceria, titania, zirconia, diamond, silicon nitride, and boron nitride, in a dispersion medium. The filtration method according to the present invention is preferably used for removing, from such abrasive slurry, an aggregate formed during the preparation and foreign matter in addition to impurities such as coarse particles contained in a raw material.

When a dispersion containing fine particles such as abrasive slurry is filtered using the filtration method according to the present invention, the average particle size of the fine particles contained in the dispersion is preferably 10 to 5,000 nm, and more preferably 20 to 300 nm. Unless otherwise specified, the average particle size as used herein means the average particle size measured by the BET method. Although there are other measuring methods of the average particle size such as a light scattering method and laser diffractometry, it is difficult to directly compare the average particle size measured by these methods with the particle size measured by the BET method. The average particle size measured by the methods other than the BET method may be convertible into the average particle size measured by the BET method taking the principle of measuring methods into consideration, but it is basically preferred to directly measure the average particle size by the BET method.

Further, the filtration method according to the present invention can be applied not only to the abrasive slurry itself but also to the raw material thereof. That is, the filtration method according to the present invention can be used for the purpose of removing coarse particles, gel, foreign matter, and the like from a dispersion containing the abrasive particles used as the raw material of the abrasive slurry. In addition, the filtration method according to the present invention can also be used for removing undissolved materials, foreign matter, and the like contained in various additive solutions.

The timing of filtering a liquid by the filtration method according to the present invention is not particularly limited. For example, in the case of selling abrasive slurry in a container that is filled with the abrasive slurry, the method of the present invention can be used not only when the abrasive slurry is filtered before the container is filled with the abrasive slurry as a product, but also after a user takes out the abrasive slurry from the container and before the user uses it for polishing. Furthermore, the filtration method of the present invention can also be used when the abrasive slurry used once is intended to be regenerated and reused.

### Filtration method

The filtration method according to the present invention includes filtering the liquid using a filter. A media filter made of glass fiber or plastic is preferably used in the filtration method according to the present invention. The media filter made of glass fiber or plastic refers to a media filter in which the filter part through which the liquid passes is made of glass fiber or plastic. It is not necessary that all the filter part is composed of glass fiber or plastic, and the filter part may include fiber or metal as a core material, for example, for improving the mechanical strength of the filter. However, even in this case, the core material is preferably covered with glass fiber or plastic so as not to be in direct contact with the liquid to be filtered. This is because, when the core material is metal, undesirable metal ions or the like may be dissolved in the liquid.

In the filtration method according to the present invention, a media filter in which all the filter part is made of glass fiber or plastic is preferably used. Such a media filter is particularly preferred when it is inserted in the inner part of piping in a production process. A cartridge-type filter composed of a filter part and a cartridge that includes the filter part is also used. Such a cartridge-type filter has a filter member made of glass fiber or plastic and the filter member is fixed to the inner part of a housing. When such a cartridge-type filter is used, a filter is preferred in which a part to be brought into contact with the liquid such as a housing internal surface and a packing provided in a contact portion with piping is covered with or formed from plastic or rubber, and metal is not used at all in a part to be brought into contact with the liquid. Any of such media filters made of glass fiber or plastic may be optionally selected from among various commercially available filters including media filters for different applications such as for fine particle separation and for microorganism separation, in addition to media filters having different structures as described above.

The type of glass fiber or plastic used for the filter member is not particularly limited, but is preferably inert to the liquid to be filtered. When the liquid is aqueous, that is, when the solvent, which is the main component of the liquid, is water, a filter member made of common glass fiber or plastic can be used. Specifically, preferred materials used for the filter member include nylon, polycarbonate, polytetrafluoroethylene (hereinafter may be referred to as PTFE), polysulfone, polyethersulfone, cellulose and derivatives thereof, polypropylene, and glass fiber. Specific examples of Nylon include Nylon 6 and Nylon 66. Further, the derivatives of cellulose include derivatives in which the hydroxy group is substituted, and specific examples include cellulose acetate and cellulose ester.

The filter member may be a hydrophilic filter member or a hydrophobic filter member. A hydrophobic filter member is preferred because the effect of the improvement in the filtration efficiency at the time of starting use of a filter according to the present invention is higher in the case where the filter member is hydrophobic. A filter that includes a hydrophobic filter member is referred to as a hydrophobic filter herein. It is possible to know whether a filter member is hydrophobic or not by determining whether water permeates the filter member or not. When a filter member is hydrophobic, water drops may be repelled from the surface of the filter member, or pressurization is required to permeate water. Such a hydrophobic filter includes polypropylene and polytetrafluoroethylene (PTFE). The reason why the effect of the present invention is greater in the case of a hydrophobic filter member is probably because air in filter pores more easily stays and is less easily removed in the case where the material of a filter member is hydrophobic than it is hydrophilic.

Various filters are commercially available, and examples include CP filter (trade name) manufactured by Chisso Filter Co., Ltd., Polypro-Klean (trade name) manufactured by Sumitomo 3M Limited, Profile II (trade name) manufactured by Nihon Pall Ltd., and Depth Cartridge Filter (trade name) manufactured by Advantec Toyo Kaisha, Ltd.

The filter member may be a depth filter of the nonwoven fabric type prepared by randomly and uniformly forming fibers made of a plastic such as polypropylene into a predetermined thickness or a membrane filter of the membrane type that is formed by boring pores having a size of about 0.01µm to several µm in a plastic membrane. Both types may be used in the present invention, but the nonwoven fabric type, in particular, the nonwoven depth filter, is preferably used because the effect of the present invention tends to be more significantly developed. This is probably because the stagnation of air in pores influences the filtration efficiency to a greater extent in the case of the depth filtration. However, improvement in the filtration efficiency can be expected by applying the filtration method of the present invention even in the case of sieving filtration or cake filtration because there may be an effect of removing fine particles in pores.

The depth filter can be roughly classified into the following two types. One is a planar filter having a planar filter paper shape. The other is a pipe-shaped filter in which nonwoven fabric is wound around a cylinder core or the like. Generally, one end or both ends of such a pipe-shaped filter are processed so that liquid may not leak, and the pipe-shaped filter is often handled in the form housed in a cartridge. Generally, a cartridge-type three-dimensional or pipe-shaped filter, which is housed in a cartridge, is preferably used for industrial use. This is because it has a large filtration area and is excellent also in handleability. Any such shape can be used in the filtration method according to the present invention.

As the filtration precision of the filter used in the present invention, any one can be used depending on the type of the liquid to be filtered, the component contained therein, the size of the impurities to be removed, and the others. For example, in order to efficiently remove common abrasive slurry for semiconductors, the filtration precision of a filter is preferably 5 µm or less, more preferably 1 µm or less, further preferably 0.5 µm or less, most preferably 0.3 µm or less. The filtration precision of 0.3 µm herein is defined as the filtration precision in which 99.9% or more of particles having an average particle size of 0.3 µm or more is removed.

In the filtration method according to the present invention, it is required to treat a filter member before a target liquid is filtered. This treatment is performed by subjecting the filter member to decompression treatment in a solvent-filled sealed container. Hereinafter, this treatment may be referred to as "pretreatment". Such a treatment probably removes gas present in the pores in a filter member to wet the inside of the pores, resulting in achieving high filtration efficiency immediately after starting filtration.

Specifically, the pretreatment according to the present invention is performed by enclosing the filter member in the solvent-filled sealed container and decompressing the inner part of the sealed container. At this time, it is preferred that the whole filter member is in contact with the solvent. When not the whole filter member is in contact with the solvent, the pretreatment is substantially not applied to a part that is not in contact with the solvent, and the filtration efficiency is not improved in this part. It is preferred that the whole filter member is in contact with the solvent because the more the part that is not in contact with the solvent is increased, the smaller the filtration efficiency improvement effect is.

In the pretreatment according to the present invention, the decompression condition is preferably 10 kPa or less, and more preferably 5 kPa or less. If the decompression degree is too low, the effect of the present invention will not be sufficiently exhibited. On the other hand, when performing the decompression treatment, the lower the pressure is, the stronger the effect of the present invention tends to develop. However, it should be noted that an excessive decompression may not only result in saturation of the effect but may also require excessive cost to achieve the low pressure.

Further, the time for performing the decompression treatment is not particularly limited, but it is preferably 30 seconds or more, more preferably 60 seconds or more because the effect of the present invention will not be sufficiently exhibited if it is too short. The longer the time of the decompression treatment is, the stronger the effect of the present invention tends to develop. However, it should be noted that an excessively long decompression treatment time may not only result in saturation of the effect but may also reduce production efficiency.

The solvent used in the filtration method according to the present invention is the same solvent as the solvent that is the main component of the liquid to be filtered. When the target liquid is not a solution but a dispersion, the medium is generally called a dispersion medium, but here the medium is referred to as a solvent including also such a dispersion medium, for convenience.

When liquid is, for example, aqueous abrasive slurry, the solvent, which is the main component of the liquid, is water. In such a case, the filter member is pretreated by enclosing it in the water-filled sealed container and decompressing the inner part of the sealed container. When the solvent is water, any type of water can be used including distilled water, pure water or ultrapure water prepared by removing impurity ions with an ion-exchange resin and then removing foreign matter through a filter, and deaired water. Furthermore, the solvent is not particularly limited because it is suitably selected depending on the liquid to be filtered, and it may be organic solvent. When the solvent, which is the main component of the liquid, is mixed solvent, the mixed solvent may be used. However, the effect of the present invention is strongly exhibited in the case where the solvent, which is the main component of the target liquid, is water.

The solvent used in the pretreatment may further contain any additive in the range where it does not impair the effect of the present invention. For example, various reducing deoxidizers, a preservative, and alcohol may be added to the solvent. It is particularly preferred to use a known additive that helps the introduction of the solvent into the pores of the filter.

The solvent used in the pretreatment may further contain a component contained in the liquid to be filtered. That is, when the liquid to be filtered is, for example, aqueous abrasive slurry, it contains components such as abrasive particles, a water soluble polymer compound, an acid or alkali as a pH adjuster, a preservative, and a surfactant in addition to water, which is the main component and is a solvent. At this time, the solvent used in the present invention may contain these components. Therefore, the abrasive slurry itself to be filtered can be used as the solvent.

It is preferred that the composition of the components of the liquid to be filtered is close to that of the solvent used in the pretreatment, because after the filter is subjected to decompression treatment, the replacement of the solvent remained in the filter is easy or unnecessary. Particularly, when the liquid to be filtered is used as a solvent for pretreatment, the pretreatment and the filtration of the liquid can be seamlessly performed, and a solvent containing a different component is not mixed with the target liquid to provide a different liquid at the time of starting filtration of the liquid, thereby preferably reducing the loss at the time of starting filtration.

In the present invention, the pretreatment can be performed by any method and at any time. For example, a module or the like that can be isolated as a sealed container is provided in the downstream piping of the preparation process of a liquid; a filter is attached to the module or the like; and, before filtering the prepared liquid, a solvent is temporarily passed through the piping to fill the sealed container, which is followed by sealing and decompression treatment. This is preferred because a pretreatment facility other than the filtration facility for the liquid is not required, and the liquid can be continuously used in the filtration process after the pretreatment. The filter that is once subjected to the pretreatment can exhibit the effect of the present invention even if it is brought into contact with air as long as it is not dried. Therefore, it is also possible to prepare a dedicated apparatus in which a filter member can be decompression-treated in a solvent, prepare many pretreated filters, and replace the filter if needed. Such a method is preferred because it is not necessary to pass a solvent that is different from the target liquid through the piping in the preparation process of the liquid, and it is possible to continuously prepare the liquid.

In the present invention, the pretreatment can also be combined with a method for giving physical impacts such as an ultrasonic wave and vibration. When such a method is combined, the effect of the present invention tends to be exhibited more strongly. This is probably because air that is present in the pores of a filter, as described above, can be more effectively removed by combining the method.

The filtration method according to the present invention can be used in any stage in production of various liquid materials. Advantageously, the non-deaired liquid used in the present invention has a low possibility of the incorporation of impurities and gives little influence on the quality of the liquid to be produced because the non-deaired liquid contains the same components as the medium of the liquid to be filtered except dissolved gas. The filtration method according to the present invention is preferably used for the production of a liquid in which fine particles are dispersed as described above, but it is particularly preferably used for the production of abrasive slurry.

The present invention will be described below with reference to examples.

### [Examples 1 to 7]

A depth filter having a total length of about 50 cm (filter size: a total length of about 50 cm; an outside diameter of about 7 cm; and an inside diameter of about 2.8 cm) was prepared as a filter member for filtering liquid, and the filter member was decompression-treated in a solvent-filled sealed container according to the pretreatment conditions described below.

### Pretreatment conditions

Decompression treatment time: 0.25 min, 0.5 min, 1 min, 2 min, 5 min, 30 min, or 60 min
Decompression condition: 1.2 kPa or 10 kPa
Decompression device: VP-SD 300V manufactured by Mitsubishi Electric FA Industrial Products Corporation
Solvent: Ultrapure water

Then, non-deaired ultrapure water was prepared as a liquid, and the filtration efficiency (the flow rate of the liquid passing through a filter) when the ultrapure water was filtered under the conditions shown below using a pretreated filter was measured for evaluation.

### Filtration conditions

Pump: LEVITRO pump LEV300 (manufactured by Iwaki Co., Ltd.)
Water-passing condition: Number of revolutions 2,500 rpm

### [Comparative Example 1]

The same filter as in Example 1 was prepared, and it was subjected to pretreatment by changing the decompression condition to 50 kPa among the pretreatment conditions. Then, the evaluation was performed in the same manner as in Example 1.

### [Comparative Examples 2 and 3]

The same filter as in Example 1 was prepared, and it was subjected to the pretreatment of only immersing it in ultrapure water or IPA in the atmospheric pressure (101.325 kPa). Then, the evaluation was performed in the same manner as in Example 1. The treatment by immersing in ultrapure water was performed by immersing the filter in ultrapure water and still standing it for 1 hour in the ultrapure water. The treatment by immersing in IPA was performed by immersing the filter in IPA at a relatively slow speed of 2 cm/s and still standing it for 60 min followed by washing the filter with pure water (5 L/min, 500 L or more of pure water).

The pretreatment conditions of Examples 1 to 8 and Comparative Examples 1 to 3 and the obtained evaluation results were as shown in Table 1.

**Table 1**

| | Filter member | | | Pretreatment | | | Filtration efficiency (L/min ) |
|---|---|---|---|---|---|---|---|
| | Material | Type | Filtration precision (µm) | Method | Treatment time (min) | Ultimate pressure (kPa) | |
| Example 1 | Polypropylene | Nonwoven fabric | 2 | Decompression treatment | 0.25 | 1.2 | 6.5 |
| Example 2 | Polypropylene | Nonwoven fabric | 2 | Decompression treatment | 0.5 | 1.2 | 8.0 |
| Example 3 | Polypropylene | Nonwoven fabric | 2 | Decompression treatment | 1 | 1.2 | 12.5 |
| Example 4 | Polypropylene | Nonwoven fabric | 2 | Decompression treatment | 2 | 1.2 | 13.0 |
| Example 5 | Polypropylene | Nonwoven fabric | 2 | Decompression treatment | 5 | 1.2 | 13.8 |
| Example 6 | Polypropylene | Nonwoven fabric | 2 | Decompression treatment | 30 | 1.2 | 15.3 |
| Example 7 | Polypropylene | Nonwoven fabric | 2 | Decompression treatment | 60 | 1.2 | 15.5 |
| Example 8 | Polypropylene | Nonwoven fabric | 2 | Decompression treatment | 60 | 10 | 13.0 |
| Comparative Example 1 | Polypropylene | Nonwoven fabric | 2 | Decompression treatment | 60 | 50 | 6.0 |
| Comparative Example 2 | Polypropylene | Nonwoven fabric | 2 | (Immersion in ultrapure water for 60 min in the atmospheric pressure) | | | 6.0 |
| Comparative Example 3 | Polypropylene | Nonwoven fabric | 2 | (Immersion in IPA for 60 min in the atmospheric pressure) | | | 15.0 |

From Table 1, it was found out that high filtration efficiency was unable to be obtained by a method for immersing a filter in ultrapure water unlike the method of the present invention of subjecting a filter to decompression treatment in a solvent-filled sealed container as a pretreatment. Further, the method for immersing in IPA (Comparative Example 3) showed the effect of the improvement in the filtration efficiency, but it was necessary to pass a large amount of water in order to replace IPA permeated into the filter by ultrapure water, which has increased the treatment time and cost. Therefore, this method was not practical. Further, even when the ultimate pressure is high, the filtration efficiency tends to be improved by increasing the treatment time, but the long treatment time will increase the time of the whole filtration treatment. Therefore, it was found out that the ultimate pressure was preferably 10 kPa or less.

### [Example 9 and Comparative Examples 4 to 5]

A filter that was only different in filtration precision but had the same material and shape as in Example 1 was prepared. The filter was decompression-treated in a ultrapure water-filled sealed container for 60 min at 1.2 kPa. Then, abrasive slurry containing fumed silica having an average particle size of 30 nm in a concentration of 13% by weight was prepared as a liquid to be filtered, and it was filtered under the filtration conditions shown below using the pretreated filter. At this time, filtration efficiency was measured immediately after starting filtration, when 100 L was passed, when 200 L was passed, and when 300L was passed. The time required for passing 360 L of the abrasive slurry in total was also measured.

### Filtration conditions

Pressurization for passing abrasive slurry: 0.16 MPa
Pump: Diaphragm pump (manufactured by Wilden Pump & Engineering Company)

In Comparative Examples 4 and 5, abrasive slurry was filtered using the same filter as in Example 7. The filter had been treated in the same manner as in Comparative Examples 2 and 3, respectively. Comparative Examples 4 and 5 were also evaluated in the same manner as in Example 7. The obtained results were as shown in Table 2.

**Table 2**

| | Filter member | | | Pretreatment | | | Filtration efficiency (L/min) | | | | 360 L filtration time (min) |
|---|---|---|---|---|---|---|---|---|---|---|---|
| | Material | Type | Filtration precision (µm) | Method | Treatment time (min) | Ultimate pressure (kPa) | Immediately after starting | 100L | 200L | 300L | |
| Example 9 | Polypropylene | Nonwoven fabric | 1 | Decompression treatment | 60 | 1.2 | 6.0 | 7.0 | 7.5 | 6.0 | 58 |
| Comparative Example 4 | Polypropylene | Nonwoven fabric | 1 | (Immersion in ultrapure water for 60 min in the atmospheric pressure) | | | 3.2 | 4.3 | 5.0 | 4.8 | 87 |
| Comparative Example 5 | Polypropylene | Nonwoven fabric | 1 | (Immersion in IPA for 60 min in the atmospheric pressure) | | | 5.8 | 6.8 | 7.1 | 6.0 | 63 |

From Table 2, it was found out that, also when abrasive slurry is filtered, the method of the present invention in which a filter is decompression-treated in a solvent-filled sealed container as a pretreatment achieves higher filtration efficiency than a method for using a filter that is only simply immersed in a solvent. It was also found out that according to the method of the present invention, an improvement in the efficiency in the production process is possible because filtration efficiency that is equivalent to the case where a filter is immersed in IPA or higher can be achieved, and water washing required after IPA immersion is unnecessary or facilitated.

## Claims

1. A method for filtering a liquid by a filter, the method **characterized by** subjecting the filter to decompression treatment in a solvent-filled sealed container before the liquid is filtered by the filter, the solvent being a main component of the liquid.

2. The filtration method according to claim 1, wherein the decompression treatment condition is 10 kPa or less.

3. The filtration method according to claim 1 or 2, wherein the liquid is abrasive slurry.

4. The filtration method according to any one of claims 1 to 3, wherein the filter is a hydrophobic filter.

5. The filtration method according to any one of claims 1 to 4, wherein the filter is a nonwoven depth filter.

6. A method for producing abrasive slurry using the filtration method according to any one of claims 1 to 5.
